# EUROPEAN PATENT SPECIFICATION

(11) **EP 1 852 870 B1**
(45) Date of publication and mention of the grant of the patent: **22.07.2009**
(21) Application number: 07008466.0
(22) Date of filing: 26.04.2007
(51) Int. Cl.: G11B 33/08, F16F 9/10

(54) **Viscous fluid-sealed damper**
Viskose Flüssigkeit enthaltender Dämpfer
Amortisseur renfermant un liquide visqueux

(30) Priority: 02.05.2006 JP 2006128327
(43) Date of publication of application: 07.11.2007
(73) Proprietor: POLYMATECH CO., LTD., Chuo-Ku, Tokyo (JP)
(72) Inventor: Ohki, Junji, Kita-ku, Tokyo (JP)
(74) Representative: Lorenz, Werner

(56) References cited:
- EP-A- 1 209 685
- EP-A- 1 321 695
- EP-A2- 1 076 189
- US-A- 6 039 299

## Description

### BACKGROUND OF THE INVENTION

### 1. Field of the Invention

The present invention relates to a vibration attenuating device for a device (hereinafter referred to as "disk device") for reproducing information from a disc-like recording medium (hereinafter referred to as "disk") such as a CD, a CD-ROM, a DVD, a DVD-ROM, a DVD-RAM, or a magneto-optical disk for use in audio apparatuses, video apparatuses, information apparatuses, and various precision apparatuses for uses including vehicle and consumer uses. In particular, the present invention relates to a viscous fluid-sealed damper for attenuating vibration of a supported object such as a mechanical chassis formed by a motor, an optical pickup, a disk table, etc.

### 2. Description of the Related Art

A disk device reproduces recorded data from a disk by a non-contact reading device such as an optical pickup or a magnetic head, while rotating the disk at high speed. At this time, an internal disturbance vibration may be generated through operation of the disk and the non-contact reading device. In a case of a vehicle disk device or a portable disk device, an external disturbance vibration or impact may be generated as a result of traveling or carrying. In order to prevent generation of a reproduction error uncorrectable by a software device as a result of an impact applied to the mechanical chassis, the vibration is attenuated by incorporating a viscous fluid-sealed damper.

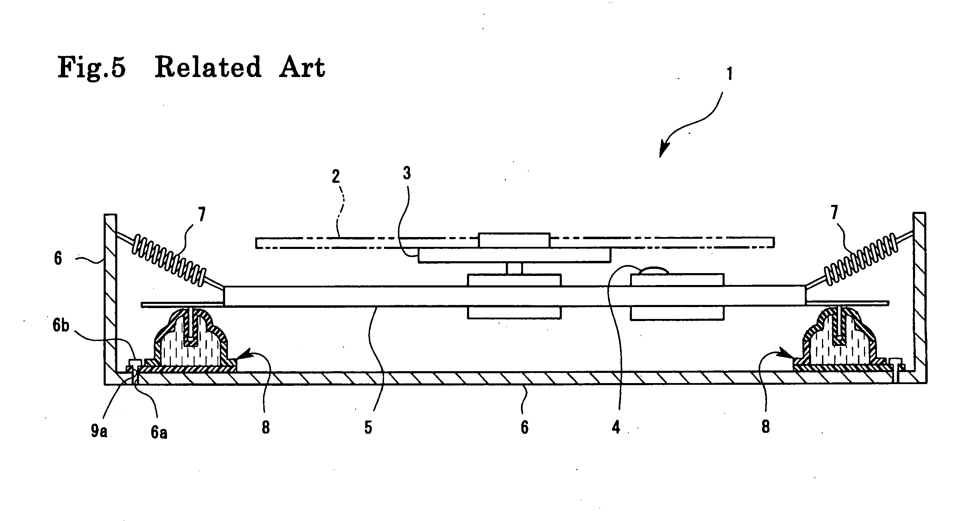

As shown in Fig. 5, in a disk device 1, a disk 2 is horizontally chucked onto a disk table 3, and the disk 2 is rotated at high speed integrally with the disk table 3, performing recording and reproduction through radial tracking on the disk 2 with an optical pickup 4. To shut off or attenuate an internal or external disturbance vibration, a mechanical chassis 5 serving as the "supported member" and a casing 6 serving as the "supporting member" are connected together by coil springs 7, and viscous fluid-sealed dampers 8 are provided between the mechanical chassis 5 and the casing 6.

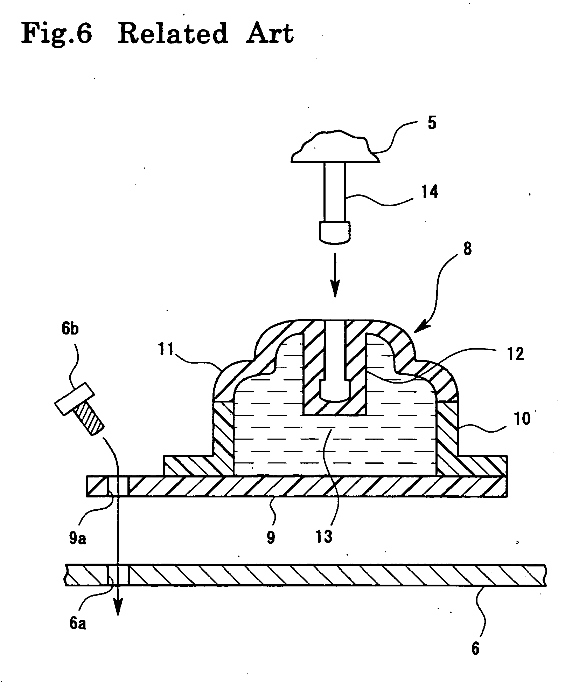

As shown in Fig. 6, in each viscous fluid-sealed damper 8, a container main body is formed by a peripheral wall portion 10 formed of a hard resin in a cylindrical configuration, a flexible membrane portion 11 formed in an undulated longitudinal sectional configuration and deformable through vibration, and an agitation cylinder portion 12 formed of a rubber-like elastic material and protruding into the interior of the damper; the interior of the container is filled with a viscous fluid 13 such as silicone oil, and is sealed by a cover member 9 formed of a hard resin. To attach the damper to the disk device 1, a mounting shaft 14 provided on the mechanical chassis 5 constituting the supported member is inserted into the agitation cylinder portion 12. At the same time, fixation is effected with a screw 6b passed through a screw hole 6a provided in the casing 6 and a screw hole 9a provided in the cover member 9. An example of the viscous fluid-sealed damper is disclosed in JP 2001-271867 A.

In some cases, while exhibiting proper quality upon inspection at the time of shipping, the viscous fluid-sealed damper 8 mounted in the disk device 1 proves inadequate in terms of vibration preventing performance when operated after unpacking. That is, during transportation and storage of the disk device 1, the disk device 1 may be placed in a vertical position. When, for example, the disk device 1 is a vehicle-mounted DVD device, packing is effected with the disk 2 storing data, such as map information, having been inserted, so the flexible membrane portion 11 of the viscous fluid-sealed damper 8 is pulled, and is left to stand with stress being applied thereto. As a result, it is to be assumed that a deterioration in vibration preventing performance is attributable to the poor storage condition of the viscous fluid-sealed damper 8.
A damper according to the preamble of claim 1 is known from EP-A-1 321 695.

### SUMMARY OF THE INVENTION

The present invention has been made with a view toward obtaining a viscous fluid-sealed damper capable of exerting a stable vibration preventing performance at the time of driving the disk device even if the disk device has been left to stand in a tilted state.

That is, the present invention provides a viscous fluid-sealed damper including a sealing container with a flexible membrane portion, and a viscous fluid sealed in the sealing container, and adapted to attenuate vibration transmitted between a supporting member and a supported member, in which the flexible membrane portion is formed of a rubber-like elastic composition containing a styrene-isobutylene-based block copolymer.

In the viscous fluid-sealed damper composed of a sealing container with a flexible membrane portion, and a viscous fluid sealed in the sealing container, and adapted to attenuate vibration transmitted between the supporting member and the supported member, the flexible membrane portion is formed of a rubber-like elastic composition containing a styrene-isobutylene-based block copolymer, so, if left to stand in a tilted state after being assembled to the disk device, that is, if left to stand in a storage condition in which stress is being applied thereto, a stable vibration preventing performance can be exerted when driving the disk device afterwards. Further, at the time of production, the flexible membrane portion and the peripheral wall portion can be easily bonded to each other by a method such as thermal fusion-bonding or ultrasonic welding.

The flexible membrane portion can be formed of a mixture composition including a styrene-isobutylene-based block copolymer containing a styrene-based block and an isobutylene-based block, and a styrene-non-isobutylene-based block copolymer containing a styrene-based block and a non-isobutylene-based block. Due to the adoption of a mixture composition including a styrene-isobutylene-based block copolymer containing a styrene-based block and an isobutylene-based block and a styrene-non-isobutylene-based block copolymer containing a styrene-based block and a non-isobutylene-based block, it is possible to exert a stable vibration preventing performance regardless of the state in which the damper is left to stand. Further, the peripheral wall portion and the hard resin material can be easily bonded to each other, thereby achieving a cost reduction and facilitating the production.

The mixing proportion of the styrene-isobutylene-based block copolymer and the styrene-non-isobutylene-based block copolymer in the composition can range from 10 wt% : 90 wt% to 70 wt% : 30 wt%. Since the mixture proportion of the styrene-isobutylene-based block copolymer and the styrene-non-isobutylene-based block copolymer ranges from 10 wt% : 90 wt% to 70 wt% : 30 wt%, it is possible to obtain a viscous fluid-sealed damper superior in durability.

The sealing container is provided with a peripheral wall portion formed of a hard resin and fixed to the flexible membrane portion, and wherein the peripheral wall portion is formed of at least one of resins selected from the group consisting of: a polystyrene resin, a polypropylene resin, an acrylonitrile-styrene-acrylate resin, an acrylonitrile-butadiene-styrene resin, a polyamide resin, a polyphenylene oxide resin, a polyphenylene ether resin, and a denatured polyphenylene ether resin.

The hard resin forming the peripheral wall portion is at least one resin selected from the group consisting of: a polystyrene resin, a polypropylene resin, an acrylonitrile-styrene-acrylate resin, an acrylonitrile-butadiene-styrene resin, a polyamide resin, a polyphenylene oxide resin, a polyphenylene ether resin, and a denatured polyphenylene ether resin, so it can be easily and firmly fixed to the above-mentioned predetermined rubber-like elastic composition through heat fusion-bonding, ultrasonic welding, etc.

In another form of a viscous fluid-sealed damper, the sealing container is equipped with an agitation cylinder portion protruding into the container. A cylinder coating portion is provided on the outer surface of the agitation cylinder portion, and the remaining portion of the agitation cylinder portion except for the cylinder coating portion may be formed of a rubber-like elastic material integral with the flexible membrane portion. Since the cylinder coating portion is provided on the outer surface of the agitation cylinder portion provided in the sealing container, and the remaining portion of the agitation cylinder portion except for the cylinder coating portion is formed of a rubber-like elastic material integral with the flexible membrane portion, no liquid leakage is involved even if a rubber-like elastic composition containing a styrene-isobutylene-based block copolymer is used, making it possible to obtain a viscous fluid-sealed damper suitable for vehicle uses involving large vibration and impacts.

It is possible to obtain a viscous fluid-sealed damper exhibiting a specific gravity reduction ratio of 10 wt% or less as measured from the time of production. Since the specific gravity reduction ratio as measured from the time of production is 10 wt% or less, if left to stand in a tilted state after assembly to the disk device, that is, if left to stand in a storage state in which stress is being applied, it is possible to exert a stable vibration preventing performance when driving the disk device afterwards.

According to the viscous fluid-sealed damper of the present invention, even if the damper is left to stand in a tilted state after assembly to the disk device, it is possible to exert a stable vibration preventing performance when driving the disk device afterwards.

Further, according to the present invention, it is possible to obtain a viscous fluid-sealed damper which easily allows mounting of the cover member after sealing in the viscous fluid, which is of a simple structure, and which can be produced at low cost.

### BRIEF DESCRIPTION OF THE DRAWINGS

In the accompanying drawing:

Fig. 1 is a sectional view of a viscous fluid-sealed damper according to a first embodiment of the present invention;

Fig. 2 is a schematic view showing how the viscous fluid-sealed damper of Fig. 1 is incorporated into a disk device and tilted by 90 degrees;

Fig. 3 is a sectional view of a viscous fluid-sealed damper according to a second embodiment of the present invention;

Fig. 4 is a sectional view of a viscous fluid-sealed damper according to a third embodiment of the present invention;

Fig. 5 is a schematic view of the inner structure of a disk device with a conventional damper with a conventional sealed-in viscous fluid mounted therein; and

Fig. 6 is a sectional view of the conventional viscous fluid-sealed damper shown in Fig. 5, illustrating how it is mounted to a mechanical chassis and a casing.

### DESCRIPTION OF THE PREFERRED EMBODIMENTS

In the following, the present invention will be described in more detail with reference to the drawings. In the drawings, reference numerals indicate portions and components. Where the material forming each portion and the production method are the same, a redundant description thereof will be omitted.

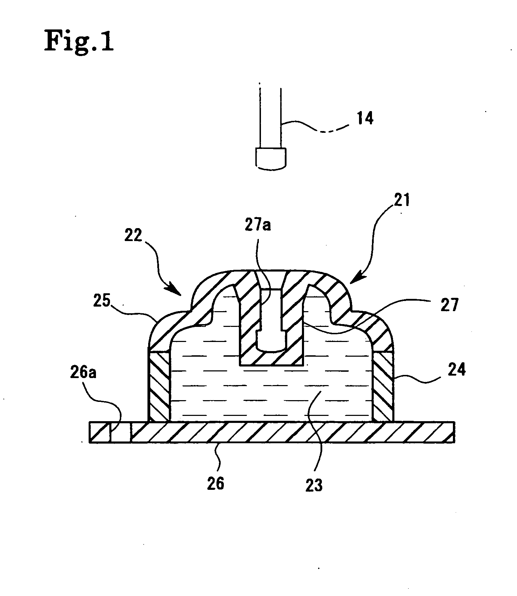

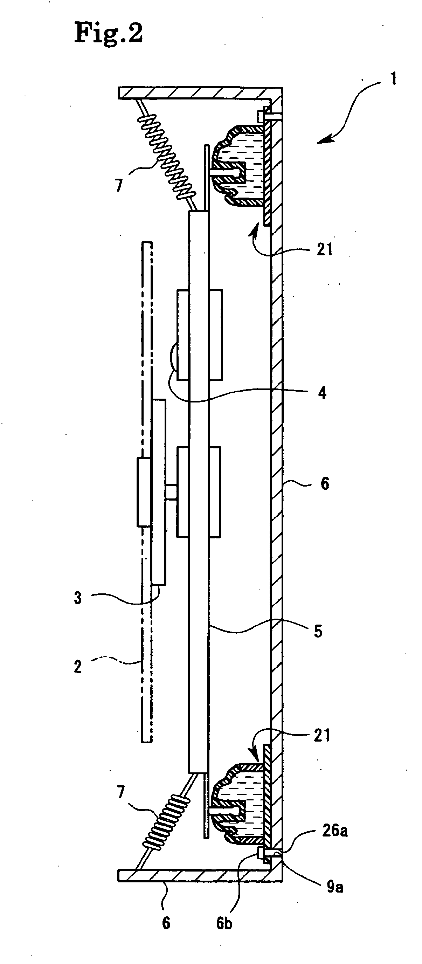

### First Embodiment (Figs. 1 and 2):

As shown in Fig. 1, a viscous fluid-sealed damper 21 according to a first embodiment has substantially the same outer configuration as that of a conventional viscous fluid-sealed damper 8. That is, a viscous fluid 23 is sealed in a sealing container 22. In the sealing container 22, the container main body is formed by a cylindrical peripheral wall portion 24 formed of a hard resin, and a dome-shaped flexible membrane portion 25 formed of a rubber-like elastic material and being attached to one end thereof to close the same, with a cover member 26 formed of a hard resin being fixed thereto.

An agitation cylinder portion 27 is formed integrally with the flexible membrane portion 25. The agitation cylinder portion 27 has an insertion recess 27a, into which there is inserted a mounting shaft 14 protruding from at least one of a mechanical chassis 5 and a casing 6 retaining the mechanical chassis 5. The agitation cylinder portion as a whole is formed as a bottomed cylinder. The inner diameter of the insertion recess 27a is somewhat smaller than the outer diameter of the mounting shaft 14, which is to be forced into the insertion recess 27a.

Next, the material forming the viscous fluid-sealed damper 21 will be described. The rubber-like elastic material forming the flexible membrane portion 25 or the agitation cylinder portion 27 is formed of a rubber-like elastic material containing a styrene-isobutylene-based block copolymer, preferably, thermoplastic elastomer. Examples of the thermoplastic elastomer include various thermoplastic elastomers such as styrene-based, olefin-based, urethane-based, ester-based, and vinyl chloride-based. Of thermoplastic elastomers, styrene-based thermoplastic elastomer is preferable.

Examples of the thermoplastic elastomer containing a styrene-isobutylene-based block copolymer preferably include a mixture composition of a styrene-isobutylene-based block copolymer containing a styrene-based block and an isobutylene-based block and a styrene-non-isobutylene-based block copolymer containing a styrene-based block and a non-isobutylene-based block, that is, a mixture composition of a styrene-isobutylene-based block copolymer and a styrene-based block copolymer not containing an isobutylene block.

Here, the term styrene-isobutylene-based block copolymer means, for example, styrene-isobutylene block copolymer (SIB) and styrene-isobutylene-styrene block copolymer (SIBS). The term means a block copolymer containing a styrene-based block composed of a molecular chain mainly containing styrene units and an isobutylene-based block composed of a molecular chain mainly containing isobutylene units.

The term styrene-non-isobutylene-based block copolymer means a block copolymer containing a styrene-based block including a molecular chain mainly containing styrene units, and a non-isobutylene-based block including a molecular chain containing no isobutylene units. Examples of the styrene-non-isobutylene-based block copolymer include a styrene-butadiene-styrene block copolymer (SBS) or a styrene-butadiene-butylene-styrene block copolymer (SBBS), a styrene-ethylene-butylene-styrene block copolymer (SEBS), a styrene-ethylene-butylene block copolymer (SEB), a styrene-ethylene-propylene-styrene block copolymer (SEPS), a styrene-ethylene-propylene block copolymer (SEP), a styrene-isoprene-styrene copolymer (SIS), hydrogenated polymer (HSBR) including other random SBRs, or their blend product with polypropylene.

The mixture ratio of the styrene-isobutylene-based block copolymer and the styrene-non-isobutylene-based block copolymer in the mixture composition, which is a rubber-like elastic material, ranges from 10 wt% : 90 wt% to 70 wt% : 30 wt%. That is, the styrene-isobutylene-based block copolymer can be mixed at a ratio of 10 wt% to 70 wt%. When its ratio is less than 10 wt%, the specific gravity of the viscous fluid-sealed damper is reduced when left in a tilted state after assembly to a disk device 1, resulting in a deterioration in vibration preventing performance; it may lead to generation of a sound skip during reproduction of information from a disk 2. On the other hand, when the ratio exceeds 70 wt%, a deterioration in moldability is involved. Further, cracking or scraping may occur in the flexible membrane portion 25 and the agitation cylinder portion 27 Preferably, the ratio of the styrene-isobutylene-based block copolymer ranges from 10 wt% to 60 wt%. In this range, the viscous fluid-sealed damper 21, having a hard wall portion 27c in the agitation cylinder portion 27, exhibits a superior durability even if the vibration and the impact are large. More preferably, the ratio of the styrene-isobutylene-based block copolymer ranges from 10 wt% to 40 wt%. In normal use, when the ratio is not more than 40 wt%, almost no scraping or rupture of the rubber-like elastic material occurs.

The mixing of the styrene-isobutylene-based block copolymer can be effected by using an ordinary rubber mixer such as a kneader. For example, it is possible to mix a thermoplastic elastomer with the requisite mixture agent including a softening agent by using, for example, a rubber mill, a brabender mixer, a Banbury mixer, a kneader, a one-axis extruder, or a two-axis extruder, preparing the material through heat-melt kneading. Apart from a softening agent, examples of the mixture agent include a filler or a reinforcing agent such as silica, talc, glass fiber, mica, graphite, calcium carbonate, and glass balloon. Apart from the above, examples of the mixture agent further include antioxidant, ultraviolet absorbing agent, antistatic agent, fire retardant, lubricant, foaming agent, coloring agent, pigment, crosslinking agent, coagent, a polyolefin resin, a polystyrene resin, polyphenylene ether, various tackifiers, and a mixture of those substances.

As the material of the peripheral wall portion 24 and the cover member 26, it is possible to use a hard resin or metal; from the viewpoint of ease of molding and a reduction in weight, it is desirable to employ a hard resin. In particular, it is desirable to employ a thermoplastic resin allowing integral molding with the rubber-like elastic material. Taking into account the requisite performance of the target member, such as dimensional accuracy, heat resistance, mechanical strength, durability, and reliability, and a reduction in weight and workability, examples of the material that can be used include thermoplastic resins, such as a polyethylene resin, a polypropylene resin, a polyvinyl chloride resin, a polystyrene resin, an acrylonitrile-styrene-acrylate resin, an acrylonitrile-butadiene-styrene resin, a polyamide resin, a polyacetal resin, a polycarbonate resin, a polyethylene terephthalate resin, a polybutylene terephthalate resin, a polyphenylene oxide resin, a polyphenylene sulfide resin, a polyurethane resin, a polyphenylene ether resin, a denatured polyphenylene ether resin, a silicone resin, a polyketone resin, and liquid crystal polymer. Those resins can be used singly or as a composite material. Further, it is possible to achieve an improvement in dimensional accuracy and heat resistance by adding a filler, such as powder or fibrous metal, glass, or filler, to those thermoplastic resins. Of those resins, the polystyrene resin, the polypropylene resin, the acrylonitrile-styrene-acrylate resin, the acrylonitrile-butadiene-styrene resin, the polyamide resin, the polyphenylene oxide resin, the polyphenylene ether resin, and the denatured polyphenylene ether resin are preferable in terms of having an excellent adhesion properties with respect to a thermoplastic elastomer containing the above-mentioned styrene-isobutylene-based block copolymer.

The viscous fluid 23 sealed in the sealing container 22 performs viscous flow within the sealing container 22 and absorbs vibration energy, so it is necessary for the fluid to exhibit appropriate viscosity, time stability within the sealing container 22, heat resistance, etc. As the viscous fluid 23, it is possible to use a liquid alone; further, it is also possible to add solid particles that are free from reaction or dissolution in the liquid. For example, while it is possible to use silicone oil alone, it is also possible to use, for example, a silicone grease in which there are dispersed solid particles that are free from reaction or dissolution in silicone oil. Examples of the silicone oil include dimethyl silicone oil, methylphenyl silicone oil, methylhydrogen silicone oil, and fluorine-denaturated silicone oil. Examples of the solid particles which do not react with and dissolve in silicone oil include a silicone resin powder, a polymethylsilsesquioxane powder, a wet silica powder, a dry silica powder, a glass bead, a glass balloon, and their particles which is subjected to surface treatment. Those liquids and solid particles can be used singly or in combination. In the case of an apparatus in which generation of siloxane or the like causes a problem, it is also possible to use, instead or silicone oil or silicone grease, a non-silicone grease in which there are dispersed solid particles that are free from reaction or dissolution in poly-α-olefin-based oil, paraffin-based oil, polyethylene glycol-based oil, etc. As the solid particles, it is possible to use the same material as mentioned above.

The viscous fluid-sealed damper 21 formed of those materials can be formed two-color molding, etc. of a hard resin and soft elastomer. For example, after forming the container main body by integrating the agitation cylinder portion 27 and the flexible membrane portion 25 formed of a predetermined rubber-like elastic material as mentioned above and the peripheral wall portion 24 formed of a hard resin by two-color molding, insert molding or the like, the container is filled with the viscous fluid 23, and the container main body is sealed by the cover member 26. Since both the peripheral wall portion 24 and the cover member 26 are formed of a hard resin, the fixation of the container main body and the cover member 26 can be effected easily by ultrasonic welding or the like.

As shown, for example, in Fig. 2, the disk device 1 with the viscous fluid-sealed damper 21 incorporated therein is placed in a vertical position during transportation, etc., and even if it is left with the flexible membrane portion 25 of the viscous fluid-sealed damper 21 deformed, it is possible to exert a proper vibration preventing performance when driving the disk device 1.

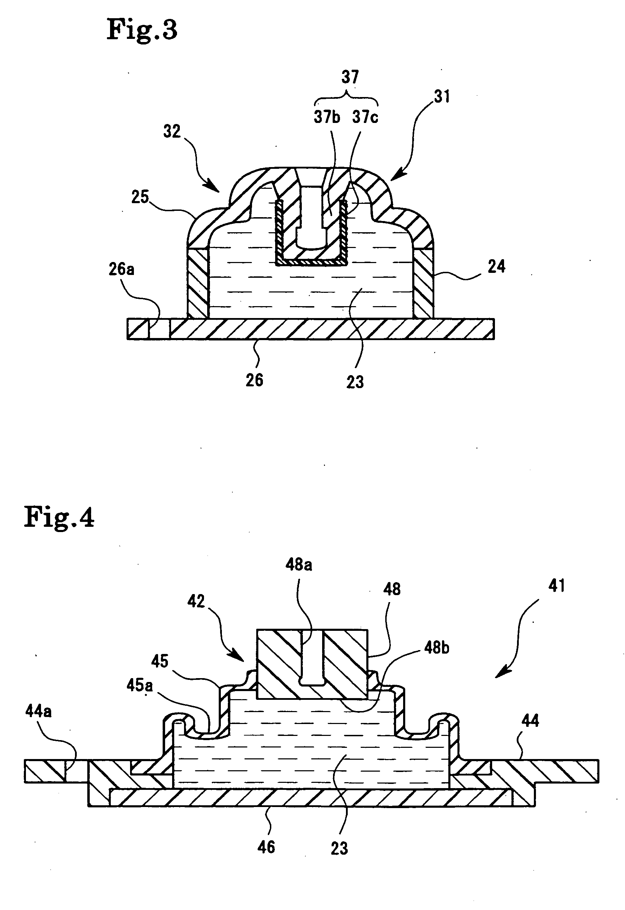

### Second Embodiment (Fig. 3):

Fig. 3 shows a viscous fluid-sealed damper 31 according to a second embodiment. The viscous fluid-sealed damper 31 differs from the viscous fluid-sealed damper 21 of the first embodiment in the structure of an agitation cylinder portion 37. In a sealing container 32, the container main body is formed by the peripheral wall portion 24, the flexible membrane portion 25, and the agitation cylinder portion 37, with the cover member 26 being fixed thereto. The agitation cylinder portion 37 of this embodiment is composed of a cylinder portion main body 37b continuous and integral with the flexible membrane portion 35, and a hard wall portion 37c covering the cylinder portion main body 37b over the entire periphery thereof except for the longitudinal end portions of a hard wall portion 37c of the cylinder portion main body 37b. The hard wall portion 37c can also be formed of the same material as the peripheral wall portion 24 and the cover member 26. The hard wall portion 37c covers the cylinder portion main body 37b formed of a rubber-like elastic material, so if the agitation cylinder portion 37 hits the cover member 26 and the peripheral wall portion 24 as a result of an impact, it is possible to protect the cylinder portion main body 37b.

In the disk device 1 in which the viscous fluid-sealed damper 31, even if it is left to stand with the flexible membrane portion 25 deformed, it is possible to exert a proper vibration preventing performance when driving the disk drive 1.

### Third Embodiment (Fig. 4):

Fig. 4 shows a viscous fluid-sealed damper 41 according to a third embodiment. The viscous fluid-sealed damper 41 has no structure like the agitation cylinder portion 27, 37 greatly protruding into the sealing container. Instead, the damper 41 has a connecting top portion 48 to be connected with the mechanical chassis constituting the supported member. The connecting top portion 48 is formed of a hard resin; at the center of the connecting top portion 48, there is provided an insertion recess 48a into which the mounting shaft 14 mounted to the mechanical chassis 5 is to be inserted. While a bottom surface 48b of the connecting top portion 48 protrudes into the sealing container beyond its surface connected to a flexible membrane portion 45, it does not protrude down to a trough portion 45a of the flexible membrane portion 45, and the connecting top portion 48 does not substantially protrude into the interior of the sealing container.

In the disk device 1 with the viscous fluid-sealed damper 41 incorporated therein, even if it is placed in a vertical position during transportation and left to stand with the flexible membrane portion 45 deformed, it is possible to exert a proper vibration preventing performance at the time that the disk device is driven. Further, the viscous fluid-sealed damper 41 helps to achieve a reduction in the size and thickness of the disk device 1. Further, since the connecting top portion 48 scarcely protrudes into the sealing container, it is possible to avoid contact of the connecting top portion 48 with some other portions constituting the sealing container upon an impact, thereby making it possible to prevent liquid leakage.

### Examples

There were produced viscous fluid-sealed dampers (21) according to the first embodiment of the configuration as shown in Fig. 1 and viscous fluid-sealed dampers (31) according to the second embodiment of the configuration as shown in Fig. 3. For the peripheral wall portion (24), the cover member (26), and the hard wall portion (37c), polypropylene resin was used as a hard resin, and silicone oil was used as the viscous fluid (23). For the flexible membrane portion (25) and the agitation cylinder portion (27) (or the cylinder portion main body (37b)), styrene-ethylene/butylene-styrene block copolymer (hereinafter abridged as "SEBS") was used as a styrene-non-isobutylene-based block copolymer, and this was blended with styrene-isobutylene-styrene tri-block copolymer (hereinafter abridged as "SIBS") as a styrene-isobutylene-based block copolymer in a predetermined proportion to thereby prepare a mixture composition serving as the material.

Table 1 shows, as specimens 1 through 11, viscous fluid-sealed dampers (21) according to the first embodiment with the mixing proportion (mixing ratio) of the mixture composition varied, and comparative examples thereof. Similarly, Table 2 shows, as specimens 21 through 31, viscous fluid-sealed dampers (31) according to the second embodiment with the mixing ratio of the mixture composition varied, and comparative examples thereof. In Table 1, "Configuration A" indicates that specimens 1 through 11 are viscous fluid-sealed dampers (21) according to the first embodiment, and, in Table 2, "Configuration B" indicates that specimens 21 through 31 are viscous fluid-sealed dampers (31) according to the second embodiment. The viscous fluid-sealed dampers (21, 31) prepared had a diameter of 15 mm and a height of 10 mm.

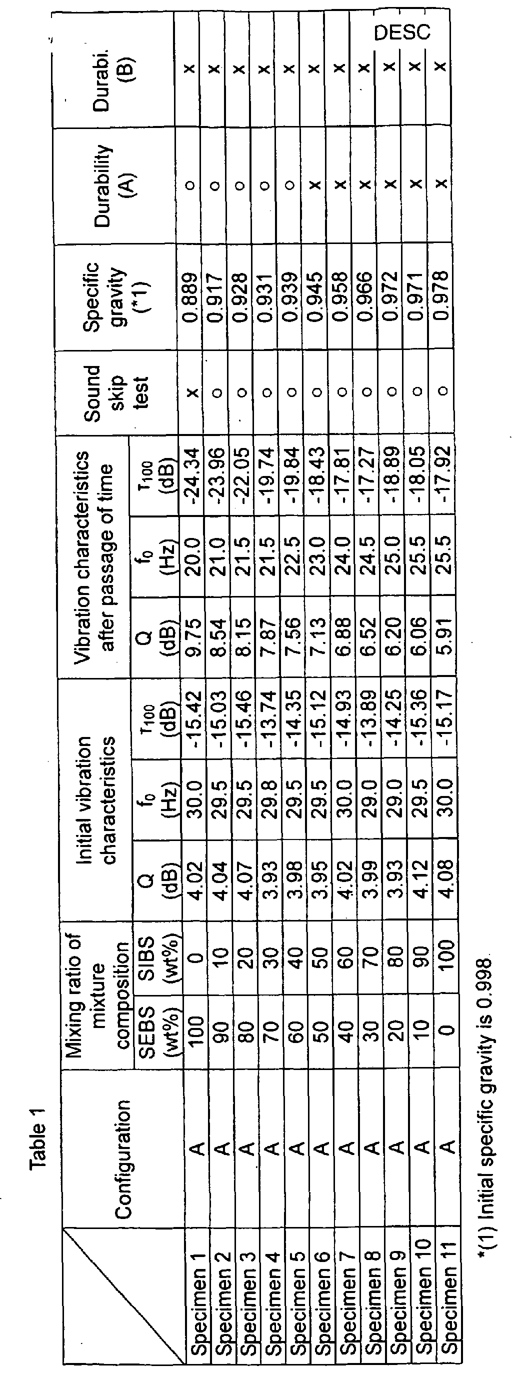

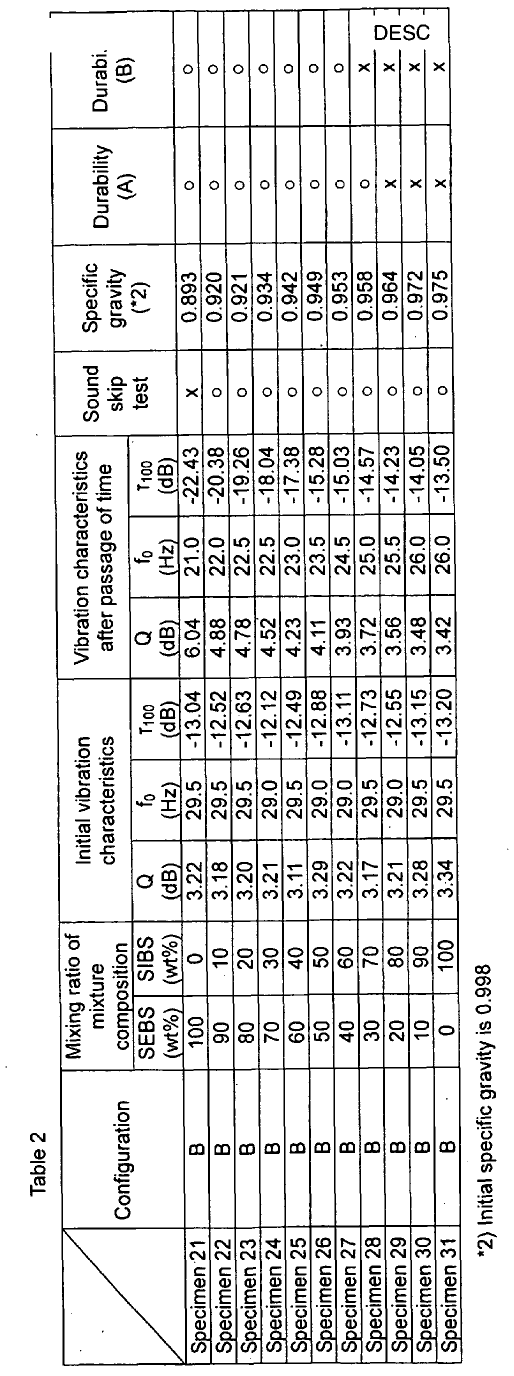

A vibration characteristic test, a sound skip test, and a durability test as described below were performed on these specimens, and their specific gravities were measured.

### Vibration characteristic test:

Viscous fluid-sealed dampers (21, 31) as shown in Table 1 or 2 were mounted in the disk device (1) in which the supported member (5) is supported by three viscous fluid-sealed dampers provided in the casing (6), and the disk device (1) was fixed to a vibrator table. Then, the device was vibrated in the vertical direction at a fixed acceleration of 9.8 m/s² and in a frequency range of 7 Hz to 200 Hz, and the vibration transmission ratio T₁₀₀ (dB) between the casing (6) and the supported member (5) was measured. The resonance magnification Q (dB) was obtained by measuring the acceleration a2 of the supported member (5) with respect to the acceleration a1 of the casing (6) at a resonance frequency f₀ (Hz), and through conversion by the relation expression of 20 Log(a2/a1). Further, the disk device (1) was tilted by 65 degrees (at 65 degrees with the front side up), and was left to stand at room temperature for five days (120 hours) before performing the same measurement. The measurement results are also shown in Tables 1 and 2.

### Sound skip test:

A viscous fluid-sealed damper (21, 31) as shown in Table 1 or 2 was incorporated in the disk device (1), which was tilted by 90 degrees (vertical installation) and was left to stand for five days (120 hours) before performing a sound skip test. In the sound skip test, the frequency was set to 20 Hz to 30 Hz, and an input acceleration was gradually increased from 0.98 m/s², detecting the input acceleration at which a sound skip audible to the testing person was generated. The cases in which the input acceleration at which a sound skip was generated was less than 9.8 m/s² are indicated by symbol "×", and the cases in which it was 9.8 m/s² or more are indicated by symbol "O". This is due to the fact that if a sound skip is generated at an input acceleration of less than 9.8 m/s², it is to be assumed that a sound skip will be also generated when driving the disk device (1). The results of the sound skip test are also shown in Tables 1 and 2.

### Specific gravity measurement:

Specific gravity measurement was performed on viscous fluid-sealed dampers (21, 31) which had been left to stand for five days and on which sound skip test was to be performed. The measurement results are shown in Tables 1 and 2.

### Durability test:

The following two kinds of durability test were conducted with the acceleration and frequency conditions, which had been adopted in the vibration characteristic test, being varied.

### (1) Durability test A:

It is a test in which indoor use or in-vehicle use during normal traveling is assumed. The disk device (1) fixed to the vibrator table was vibrated in the vertical direction at a temperature of 80°C and at an input acceleration of 21.56 m/s², with a sine wave being varied within a frequency range of 10 Hz to 50 Hz. After the vibration for 120 hours, the viscous fluid-sealed damper (21, 31) was extracted, and the change in its configuration was visually evaluated. The specimens involving detachment of the mounting shaft (14) and leakage of the viscous fluid (23) are indicated by symbol "x", and the specimens involving no such problems are indicated by symbol "O". The test results are shown in the "durability (A)" column in Tables 1 and 2.

### (2) Durability test B:

It is a test simulating use involving violent vibration and generation of impact as in a case of use during traveling on a bad road or use in a vehicle whose suspension function has been deteriorated. At a temperature of 80°C, the disk device (1) fixed to the vibrator table was vibrated in the vertical direction, with the frequency and acceleration being varied at random respectively within the ranges of 10 Hz to 1000 Hz and 5 (m/s²)²/Hz to 0.05 (m/s²)²/Hz. After vibrating for 12 hours, the viscous fluid-sealed damper (21, 31) was extracted, and the change in its configuration was visually evaluated. The specimens involving detachment of the mounting shaft (14) and leakage of the viscous fluid (23) are indicated by symbol "×", and the specimens involving no such problems are indicated by symbol "O". The test results are shown in the "durability (B)" column in Tables 1 and 2.

Regarding the vibration characteristics, the Q-value of the initial vibration characteristics remained substantially the same regardless of whether there was any SIBS added or not, whereas, in the vibration characteristics after passage of time, the Q-value was relatively low even in specimen 2 and specimen 22, to which 10 wt% of SIBS was added, as compared with specimen 1 and specimen 21, to which no SIBS was added, thus indicating an improvement in terms of vibration characteristics after passage of time. Further, it can be seen that the larger the addition amount of SIBS, the more remarkable the improvement in terms of vibration characteristics tends to be.

Regarding the sound skip test, the evaluation result was "x" in specimens 1 and 11, to which no SIBS was added, whereas the evaluation result was "O" in the specimens in which the mixing amount of SIBS was 10 wt% or more. Thus, it can be seen that, in order not to generate a sound skip, it is desirable for the mixing amount of SIBS to be 10 wt% or more.

Further, it can be seen that the changes in specific gravity are in correspondence with the sound skip test results. That is, when the result of the sound skip test is "×", the specific gravity is less than 0.90, whereas when the result of the sound skip test is "O", the specific gravity is 0.90 or more. In the viscous fluid-sealed dampers (21) of specimens 1 through 11, the specific gravity at the time of production was 0.998, and, in the viscous fluid-sealed dampers (31) of specimens 21 through 31, the specific gravity at the time of production was 0.998. Thus, from the viewpoint of the change in specific gravity, the sound skip test result was "×" when the change in specific gravity exceeds 10%, and the sound skip test result was "O" when the change in specific gravity is 10% or less. From this, instead of the sound skip test, it is possible to evaluate the vibration preventing performance of the viscous fluid-sealed damper (21, 31) from the change in specific gravity, and it can be judged that it is necessary for the change in specific gravity to be 10% or less to maintain the vibration preventing performance at the time of production.

Regarding durability, it can be seen that for indoor use or use involving no violent vibration, the mixing amount of SIBS in the viscous fluid-sealed damper (21) may be 40 wt%, and the mixing amount of SIBS in the viscous fluid-sealed damper (31) may be 70 wt% or less. On the other hand, for use involving violent vibration and, in particular, for in-vehicle use, it is desirable to adopt a viscous fluid-sealed damper (31) with an SIBS mixing amount of 60 wt% or less.

## Claims

1. A viscous fluid-sealed damper (21, 31, 41) comprising a sealing container (22, 32, 42) with a flexible membrane portion (25, 45), and a viscous fluid (23) sealed in the sealing container (22, 32, 42), and adapted to attenuate vibration transmitted between a supporting member (6) and a supported member (5),
wherein the flexible membrane portion (25, 45) is formed of a rubber-like elastic composition **characterized in that** the flexible membrane portion contains a styrene-isobutylene-based block copolymer.

2. A viscous fluid-sealed damper (21, 31, 41) according to Claim 1, wherein the flexible membrane portion (25, 45) is formed of a mixture composition including a styrene-isobutylene-based block copolymer containing a styrene-based block and an isobutylene-based block, and a styrene-non-isobutylene-based block copolymer containing a styrene-based block and a non-isobutylene-based block.

3. A viscous fluid-sealed damper (21, 31, 41) according to Claim 2, wherein the mixing proportion of the styrene-isobutylene-based block copolymer and the styrene-non-isobutylene-based block copolymer in the composition ranges from 10 wt% : 90 wt% to 70 wt% : 30 wt% or preferably 10 wt% : 90 wt% to 40 wt% : 60 wt%

4. A viscous fluid-sealed damper (21, 31, 41) according to any one of Claims 1 to 3, wherein the styrene-isobutylene-based block copolymer is a styrene-isobutylene-styrene block copolymer (SIBS).

5. A viscous fluid-sealed damper (21, 31, 41) according to any one of Claims 1 to 4, wherein the reduction ratio in specific gravity as measured from a time of production is 10 wt% or less.

6. A viscous fluid-sealed damper (21, 31, 41) according to any one of Claims 1 to 5, wherein the sealing container (22, 32, 42) is provided with a peripheral wall portion (24, 44) formed of a hard resin and fixed to the flexible membrane portion (25, 45), and wherein the peripheral wall portion (24, 44) is formed of at least one of resins selected from the group consisting of: a polystyrene resin, a polypropylene resin, an acrylonitrile-styrene-acrylate resin, an acrylonitrile-butadiene-styrene resin, a polyamide resin, a polyphenylene oxide resin, a polyphenylene ether resin, and a denatured polyphenylene ether resin.

7. A viscous fluid-sealed damper (31) according to any one of Claims 1 to 6, wherein the sealing container (32) is provided with an agitation cylinder portion (37) protruding into the sealing container (32), wherein a cylinder covering portion (37c) is provided on an outer surface of the agitation cylinder portion (37), and wherein a remaining portion (37b) of the agitation cylinder portion (37) except for the cylinder covering portion (37c) is formed of a rubber-like elastic material integral with the flexible membrane portion (25).

8. A viscous fluid-sealed damper (41) according to any one of Claims 1 to 7, wherein the sealing container (42) is provided with a connecting top portion (46) having an insertion recess (48a) into which a mounting shaft (14) provided on the supporting member (6) or the supported member (5) is to be inserted, and wherein a bottom surface (48b) of the connecting top portion (46) is situated so as not to protrude down to a trough portion (45a) of the flexible membrane portion (45).

## Patentansprüche

1. Viskose Flüssigkeit enthaltender Dämpfer (21,31, 41), welcher einen abdichtenden Behälter (22,32, 42) mit einem flexiblen Membranabschnitt (25,45) und eine in dem abdichtenden Behälter (22,32,42) eingeschlossene viskose Flüssigkeit (23) aufweist und welcher dafür vorgesehen ist, zwischen einem tragenden Element (6) und einem getragenen Halteelement (5) übertragene Vibration zu dämpfen, wobei der flexible Membranabschnitt (25,45) aus einer gummiartigen, elastischen Zusammensetzung gebildet ist,
**dadurch gekennzeichnet, dass**
der flexible Membranabschnitt (25,45) ein auf Styrol-Isobutylen-basierendes Blockcopolymer aufweist.

2. Viskose Flüssigkeit enthaltender Dämpfer (21,31, 41) nach Anspruch 1, wobei der flexible Membranabschnitt (25,45) aus einer Mischungszusammensetzung gebildet ist, welche ein auf Styrol-Isobutylenbasierendes Blockcopolymer, welches einen auf Stryrol basierenden Block und einen auf Isobutylen basierenden Block aufweist, und ein auf Styrol und nicht auf Isobutylen basierendes Blockcopolymer beinhaltet, welches einen auf Styrol basierenden Block und einen nicht auf Isobutylen basierenden Block aufweist.

3. Viskose Flüssigkeit enthaltender Dämpfer (21,31, 41) nach Anspruch 2, wobei das Mischungsverhältnis des auf Styrol und Isobutylen basierenden Blockcopolymers und des auf Styrol und nicht auf Isobutylen basierenden Blockcopolymers in der Zusammensetzung von 10 Gew..-%: 90 Gew.-% bis 70 Gew.-%: 30 Gew.-% oder vorzugsweise 10 Gew.-%: 90 Gew.-% bis 40 Gew.-%: 60 Gew.-% liegt.

4. Viskose Flüssigkeit enthaltender Dämpfer (21,31, 41) nach einem der Ansprüche 1 bis 3, wobei das auf Styrol und Isobutylen basierende Blockcopolymer ein Styrol-Isobutylen-Styrol-Blockcopolymer (SIBS) ist.

5. Viskose Flüssigkeit enthaltender Dämpfer (21,31, 41) nach einem der Ansprüche 1 bis 4, wobei der Reduktionsgrad der Dichte gemessen von einem Zeitpunkt der Produktion 10 Gew.-% oder weniger ist.

6. Viskose Flüssigkeit enthaltender Dämpfer (21,31, 41) nach einem der Ansprüche 1 bis 5, wobei der abdichtende Behälter (22,32,42) mit einem Umfangswandabschnitt (24,44) versehen ist, der aus einem harten Kunstharz gebildet und an dem flexiblen Membranabschnitt (25,45) angebracht ist, und wobei der Umfangswandabschnitt (24,44) aus wenigstens einem der Harze gebildet ist, das aus der Gruppe ausgewählt ist, die besteht aus: ein Polystyrolharz, ein Polypropylenharz, ein Acrylnitril-Styrol-Acrylatharz, ein Acrylnitril-Butadien-Styrolharz, ein Polyamidharz, ein Polyphenyloxidharz, ein Polyphenyletherharz und ein denaturiertes Polyphenyletherharz.

7. Viskose Flüssigkeit enthaltender Dämpfer (31) nach einem der Ansprüche 1 bis 6, wobei der abdichtende Behälter (32) mit einem Agitations-Zylinderabschnitt (37) versehen ist, der in den abdichtenden Behälter (32) hineinragt, wobei ein Zylinderabdeckbereich (37c) auf einer äußeren Fläche des Agitationszylinderabschnitts (37) vorgesehen ist, und wobei ein verbleibender Abschnitt (37b) des Agitationszylinderabschnitts (37) mit Ausnahme des Zylinderabdeckabschnitts (37c) aus einem gummiartigen, elastischen Material gebildet ist, welches einteilig mit dem flexiblen Membranabschnitt (25) gebildet ist.

8. Viskose Flüssigkeit enthaltender Dämpfer (41) nach einem der Ansprüche 1 bis 7, wobei der abdichtende Behälter (42) mit einem oberen Verbindungsabschnitt (46) versehen ist, welcher eine Einführungsaussparung (48a) aufweist, in welche ein auf dem tragenden Element (6) oder dem getragenen Element (5) vorgesehene Montageachse (14) einführbar ist, und wobei eine untere Fläche (48b) des oberen Verbindungsabschnitts (46) so angeordnet ist, dass sie nicht nach unten bis zu einem Trogabschnitt (45a) des flexiblen Membranabschnitts (45) übersteht.

## Revendications

1. Amortisseur hermétique à fluide visqueux (21, 31, 41) comprenant un récipient étanche (22, 32, 42) qui comporte une partie formant membrane flexible (25, 45) et un fluide visqueux (23) enfermé hermétiquement dans le récipient étanche (22, 32, 42) et adapté pour atténuer la vibration transmise entre un élément de support (6) et un élément supporté (5), dans lequel la partie formant membrane flexible (25, 45) est formée d'une composition élastique du type caoutchouc,
**caractérisé en ce que** la partie formant membrane flexible contient un copolymère bloc à base de styrène-isobutylène.

2. Amortisseur hermétique à fluide visqueux (21, 31, 41) selon la revendication 1, dans lequel la partie formant membrane flexible (25, 45) est formée d'une composition mélangée comprenant un copolymère bloc à base de styrène-isobutylène contenant un bloc à base de styrène et un bloc à base d'isobutylène, et un copolymère bloc à base de styrène non isobutylène qui contient un bloc à base de styrène et un bloc non à base d'isobutylène.

3. Amortisseur hermétique à fluide visqueux (21, 31, 41) selon la revendication 2, dans lequel la proportion de mélange du copolymère bloc à base de styrène-isobutylène et du copolymère bloc à base de styrène non isobutylène dans la composition varie de 10 % en poids : 90% en poids jusqu'à 70 % en poids : 30 % en poids ou, de préférence, de 10 % en poids : 90 % en poids jusqu'à 40 % en poids : 60 % en poids.

4. Amortisseur hermétique à fluide visqueux (21, 31, 41) selon l'une quelconque des revendications 1 à 3, dans lequel le copolymère bloc à base de styrène-isobutylène est un copolymère bloc styrène-isobutylène-styrène (SIBS).

5. Amortisseur hermétique à fluide visqueux (21, 31, 41) selon l'une quelconque des revendications 1 à 4, dans lequel le rapport de réduction en poids spécifique telle que mesurée à partir d'un moment de la production est de 10 % en poids ou moins.

6. Amortisseur hermétique à fluide visqueux (21, 31, 41) selon l'une quelconque des revendications 1 à 5, dans lequel le récipient étanche (22, 32, 42) est pourvu d'une partie de paroi périphérique (24, 44) formée d'une résine dure et fixée à la partie formant membrane flexible (25, 45), et dans lequel la partie de paroi périphérique (24, 44) est formée d'au moins une des résines choisies dans le groupe constitué par : une résine de polystyrène, une résine de polypropylène, une résine d'acrylonitrile-styrène-acrylate, une résine d'acrylonitrile-butadiène-styrène, une résine de polyamide, une résine d'oxyde de polyphénylène, une résine de polyphénylène-éther et une résine de polyphénylène éther dénaturé.

7. Amortisseur hermétique à fluide visqueux (31) selon l'une quelconque des revendications 1 à 6, dans lequel le récipient étanche (32) est pourvu d'une partie formant cylindre à agitation (37) qui fait saillie dans le récipient étanche (32), dans lequel une partie (37c) de recouvrement de cylindre est ménagée sur une surface extérieure de la partie formant cylindre à agitation (37), et dans lequel une partie restante (37b) de la partie formant cylindre à agitation (37), à l'exception de la partie (37c) de recouvrement de cylindre, est formée d'une matière élastique du type caoutchouc et d'une seule pièce avec la partie formant membrane flexible (25).

8. Amortisseur hermétique à fluide visqueux (41) selon l'une quelconque des revendications 1 à 7, dans lequel le récipient étanche (42) est pourvu d'une partie haute de liaison (48) ayant une cavité d'insertion (48a) dans laquelle une tige de montage (14) ménagée sur l'élément de support (8) ou sur l'élément supporté (5) doit être insérée, et dans lequel une surface inférieure (48b) de la partie haute de liaison (48) est située de manière à ne pas se prolonger vers le bas jusqu'à une partie en goulotte (45a) de la partie formant membrane flexible (45).
